# FASCICULE DE BREVET EUROPEEN

(11) **EP 4 060 461 B1**
(45) Date de publication et mention de la délivrance du brevet: **25.06.2025**
(21) Numéro de dépôt: 22162057.8
(22) Date de dépôt: 15.03.2022
(51) Int. Cl.: G06F 3/01

(54) **INTERFACE HAPTIQUE FLEXIBLE**
FLEXIBLE HAPTISCHE SCHNITTSTELLE
FLEXIBLE HAPTIC INTERFACE

(30) Priorité: 16.03.2021 FR 2102601
(43) Date de publication de la demande: 21.09.2022
(73) Titulaire: Commissariat à l'Energie Atomique et aux Energies Alternatives, 75015 Paris (FR)
(72) Inventeur: CASSET, Fabrice, 38054 GRENOBLE CEDEX 09 (FR)
(74) Mandataire: Ipsilon NNY

(56) Documents cités:
- US-A1- 2011 279 374
- US-A1- 2017 002 290
- US-A1- 2020 298 488
- LÖCHTEFELD MARKUS: "Towards Real Organic User Interfaces - Using Non-Newtonian Fluids for Self-Actuated Displays", ACM INTERNATIONAL CONFERENCE ON HUMAN FACTORS IN COMPUTING SYSTEMS (CHI-13) ACM 2013., 1 January 2013 (2013-01-01), XP055865041, Retrieved from the Internet <URL:https://www.dfki.de/fileadmin/user_upload/import/6816_organicUI.pdf> [retrieved on 20211123]
- CASSET F ET AL: "Piezoelectric membrane actuator design", THERMAL, MECHANICAL AND MULTI-PHYSICS SIMULATION AND EXPERIMENTS IN MICROELECTRONICS AND MICROSYSTEMS (EUROSIME), 2011 12TH INTERNATIONAL CONFERENCE ON, IEEE, 18 April 2011 (2011-04-18), pages 1/5 - 5/5, XP031865495, ISBN: 978-1-4577-0107-8, DOI: 10.1109/ESIME.2011.5765797

## Description

### Domaine technique

La présente invention concerne les interfaces homme-machine, et plus particulièrement celles produisant des effets haptiques.

### Technique antérieure

Une interface haptique permet à l'utilisateur d'interagir avec l'environnement par le sens du toucher. L'effet haptique est aujourd'hui de plus en plus utilisé dans de nombreuses applications, par exemple sur un « Smartphone », lorsque celui-ci génère une légère vibration quand on appuie sur une touche affichée à l'écran pour simuler l'impression d'appuyer sur un bouton. Des applications haptiques existent aussi pour des dispositifs de réalité virtuelle ou augmentée, en particulier pour permettre une meilleure immersion dans les jeux vidéo. Les interfaces haptiques telles que les dalles tactiles, générant un effet haptique sur une surface tactile lorsqu'un utilisateur la contacte, peuvent notamment être intégrées à de nombreuses technologies comme des ordinateurs, tablettes et/ou smartphones.

Il est connu de générer des effets haptiques variés et relativement complexes sur une surface tactile rigide grâce à des transducteurs ultrasonores émettant des ondes ultrasonores qui se propagent sur la surface rigide.

Avec l'apparition sur le marché de produits commerciaux souples, tels que des téléphones portables pliables ou encore des téléviseurs enroulables, il est désirable de disposer d'interfaces haptiques flexibles pouvant s'intégrer à de tels produits.

L'article de Poncet et. al. « Static and dynamic studies of electro-active polymer actuators and integration in a demonstrator » (Actuators Journal, 2017) décrit un dispositif comportant des actionneurs piézoélectriques montés sur un substrat souple permettant d'obtenir des boutons vibrotactiles. Cependant, pour obtenir l'effet haptique désiré, le substrat doit être supporté par une structure rigide, ce qui limite substantiellement la nature flexible du produit.

Il est par ailleurs connu d'utiliser des fluides pour générer un effet haptique. La demande WO2010078597A1 divulgue une interface haptique tactile comportant des canaux et chambres fluidiques permettant de générer un effet de bouton.

L'article de Lochtefeld « Towards real organic user interfaces - using non-Newtonian fluids for self-actuated displays » (CHI13 workshop, 2013) décrit un dispositif haptique utilisant un fluide non-newtonien rhéoépaississant pris entre deux feuilles souples posées sur un réseau fixe de haut-parleurs. Une topologie perceptible au doigt est générée lorsqu'une onde sonore se propage dans le fluide et le durcit localement. La résolution spatiale de l'effet haptique généré est toutefois relativement faible compte-tenu de l'encombrement des haut-parleurs et de plus une telle interface n'est pas complètement flexible.

### Exposé de l'invention

Il existe par conséquent un besoin pour perfectionner encore les interfaces haptiques flexibles, notamment afin de disposer d'une interface tactile relativement simple de réalisation et pouvant générer des effets haptiques variés.

### Résumé de l'invention

L'invention vise à répondre à ce besoin, et elle y parvient, selon un premier de ses aspects, grâce à une interface haptique flexible comportant :
- une chambre contenant un fluide non newtonien et délimitée au moins partiellement par une paroi flexible dont la face extérieure définit une surface tactile susceptible d'être contactée par un utilisateur,
- une pluralité d'actionneurs portés par un support flexible et disposés de manière à transmettre une excitation mécanique locale au fluide, et
- un circuit de commande relié aux actionneurs et configuré pour moduler les signaux envoyés aux actionneurs afin d'induire mécaniquement une modification de la rhéologie du fluide et générer une sensation haptique perceptible par l'utilisateur sur la surface tactile.

Par « fluide non-newtonien », on désigne un fluide dont la viscosité n'est pas constante et dépend des contraintes mécaniques auxquelles il est soumis. Ainsi, sous l'action vibratoire des actionneurs, la viscosité du fluide subit des variations locales dépendant des propriétés du fluide ; il apparaît plus ou moins « visqueux », ou plus ou moins « rigide », quand on le remue, par exemple. Un fluide rhéoépaississant, par exemple, verra sa viscosité augmenter en réponse à une sollicitation mécanique. A l'inverse, un fluide rhéofluidifiant verra sa viscosité diminuer en réponse à une sollicitation mécanique.

L'invention permet d'obtenir des effets haptiques variés sur une surface flexible en utilisant un fluide dont les variations de viscosité induites par les actionneurs sont suffisamment marquées pour être perçues tactilement par l'utilisateur, notamment par le doigt de l'utilisateur en contact avec la surface tactile de l'interface, notamment se déplaçant au contact de l'interface. Un tel effet ne peut être obtenu avec des fluides newtoniens tels que l'eau pure, dont la viscosité ou « rigidité » est constante quelle que soit la sollicitation.

Selon le nombre d'actionneurs en opération, il est possible de créer l'impression de formes rigides complexes. De plus, en jouant sur l'amplitude de sollicitation du fluide non-newtonien, la variation de viscosité sera plus ou moins importante, ce qui permet de complexifier l'effet haptique généré, en donnant l'impression à l'utilisateur de toucher une surface présentant différents degrés de dureté.

Le contact de l'utilisateur avec la surface tactile peut être un contact direct de la peau avec la surface ou un contact indirect à travers un ou plusieurs intermédiaires, permettant néanmoins un ressenti tactile, par exemple une ou plusieurs couches de vêtement(s) ou d'un gant. Le contact peut s'effectuer avec le doigt ou avec une autre région du corps.

### Chambre

La chambre a de préférence une forme générale aplatie. Elle peut notamment avoir une forme parallélépipédique lorsque l'interface est mise à plat, ce qui permet d'obtenir une interface de type tablette si on le souhaite.

La chambre a de préférence une épaisseur sensiblement constante, pouvant aller de quelques centaines de µm à quelques mm.

La chambre peut être réalisée de plusieurs façons. La chambre est par exemple formée entre au moins deux parois opposées flexibles, dont l'une d'elles au moins définit la surface haptique, notamment des parois comportant ou définies par des feuilles souples. La chambre peut alors être réalisée simplement en assemblant plusieurs feuilles souples, l'une au moins de ces feuilles pouvant être fonctionnalisée avec les actionneurs avant l'assemblage.

L'interface peut être de forme, de volume et de dimensions variés, par exemple de l'ordre du centimètre à plusieurs dizaines de centimètres, ou même du mètre.

### Parois

L'interface selon l'invention est flexible dans son ensemble, grâce à la déformabilité des parois qui délimitent la chambre, au moins dans les zones entre les actionneurs, ainsi que de celle de la ou des parois ou couches additionnelles éventuelles qui s'y superposent, au moins dans les zones entre les actionneurs.

En particulier, l'interface peut présenter une déformabilité d'ensemble en raison de la flexibilité à la fois de la paroi qui définit la surface tactile et du support qui porte les actionneurs, et qui est par exemple une paroi autre que celle qui définit la surface tactile ou la même paroi.

De préférence, la ou les parois définissant la surface tactile et servant de support aux actionneurs permettent une flexion d'ensemble de la chambre autour d'au moins un axe, mieux dans toutes les directions.

L'épaisseur de la ou des parois définissant la surface tactile et servant de support varie par exemple de quelques dizaines de microns à plusieurs mm. Cette épaisseur peut être sensiblement constante.

La paroi définissant la surface tactile peut être opaque, transparente ou translucide. Elle peut servir de guide optique, si cela est souhaité.

La surface tactile peut être lisse, ou présenter des microreliefs.

La paroi servant de support peut être opaque, transparente ou translucide.

Les faces intérieures des parois définissant la surface tactile et servant de support peuvent être lisses, ou présenter des reliefs. En particulier, les parois peuvent comporter des amincissements et/ou des surépaisseurs, par exemple pour faciliter le montage de certains éléments tels que les actionneurs, ou encore permettre l'assemblage des parois entre elles, ou créer des zones locales plus flexibles ou au contraire plus rigides, notamment au niveau des surépaisseurs.

La paroi définissant la surface tactile peut présenter une structure multicouche, notamment lorsqu'elle comporte un système de détection externe et/ou un écran souple. La paroi peut comporter une couche intérieure au contact du fluide, et une ou plusieurs couches extérieures pour réaliser des fonctions de détection et/ou d'affichage. Ces couches peuvent être assemblées de diverses manières, avec ou sans jeu entre elles, mais leur agencement permet de sentir à travers elles, sur au moins une partie de leur étendue, les modifications apportées à la rhéologie du fluide par les actionneurs.

### Fluide

Le fluide peut être opaque, translucide ou transparent. Il peut être coloré, ou non. Il peut s'agir d'un fluide rhéoépaississant, rhéofluidifiant, viscoplastique ou tout autre fluide non-newtonien adapté. Ce fluide peut être conducteur électrique ou non.

### Actionneurs

Les actionneurs sont de préférence au contact du fluide. Ainsi, leur déformation lorsqu'ils sont actionnés permet une sollicitation mécanique directe du fluide. De plus, cela facilite l'intégration d'actionneurs de petite taille, ce qui est avantageux pour conférer à l'interface la flexibilité recherchée. Cela peut également rendre plus aisé le montage des actionneurs sur la paroi servant de support, et permettre d'éviter les pertes de puissance mécanique et de résolution spatiale qui pourraient être induites par la présence d'une interface mécanique plus complexe entre les actionneurs et le fluide.

Lorsqu'ils sont au contact du fluide, les actionneurs sont notamment réalisés de manière à ce que le fluide n'induise pas de court-circuit.

Les actionneurs sont répartis au sein de l'interface selon les effets haptiques que l'on souhaite générer. Les actionneurs peuvent être répartis sans pas réguliers entre eux, mais avantageusement ils sont répartis avec un espacement régulier dans au moins une direction, mieux dans deux directions. Au moins une partie des actionneurs peut être agencée en lignes et/ou en colonnes, de préférence selon un réseau régulier.

La densité d'implantation des actionneurs dans une direction varie par exemple de 50 actionneurs à 1 actionneur / cm. Cette densité peut être constante ou variable, selon une direction ou dans toutes les directions.

Les actionneurs sont par exemple, pour des actionneurs de 1mm de diamètre, espacés d'une distance correspondant à 4 mm centre à centre.

L'interface peut comporter au moins deux ensembles d'actionneurs de part et d'autre du fluide, disposés en regard les uns des autres ou de manière décalée. Ainsi, une partie des actionneurs peut être portée par la paroi qui définit la surface tactile. La densité d'implantation des actionneurs peut être la même de part et d'autre du fluide, ou elle peut être différente.

L'utilisation de deux ensembles d'actionneurs permet d'augmenter l'effet mécanique des actionneurs sur le fluide, et d'obtenir une meilleure résolution spatiale lorsque les actionneurs sont disposés de manière décalée.

En modulant l'amplitude de chaque actionneur et en utilisant ou non des actionneurs en regard, des effets haptiques donnant une impression de relief peuvent être générés, avec par exemple des zones localement rigides sur toute l'épaisseur du fluide ou sur une partie seulement.

On peut aussi jouer sur la taille et la forme des actionneurs pour générer des effets haptiques plus complexes.

Chaque actionneur peut être de type piézoélectrique, ferroélectrique, électromagnétique, thermique ou piézoélectrique céramique. De préférence, l'actionneur est de type piézoélectrique céramique. On peut par exemple utiliser des céramiques piézoélectriques commerciales, et les amincir à l'épaisseur souhaitée avant de les intégrer à l'interface.

Les actionneurs peuvent en outre comporter une couche de passivation, qui recouvre leur matériau piézoélectrique, la couche de passivation étant par exemple au contact direct du fluide. Cela permet d'éviter que le fluide n'induise de court-circuit dans les actionneurs.

Chaque actionneur est par exemple collé sur la paroi servant de support, mais en variante la fixation peut s'effectuer autrement, par exemple par soudage, moulage ou surmoulage.

### Membranes

L'actionneur peut être intégré à l'interface de différentes façons.

De préférence, chaque actionneur est porté par une membrane active susceptible de vibrer sous l'action de l'actionneur, la vibration de la membrane sollicitant mécaniquement le fluide dans la zone adjacente à l'actionneur. La présence d'une telle membrane permet d'accroître la surface accompagnant la vibration de l'actionneur, et d'amplifier la déformation issue de l'actionnement piézoélectrique pour solliciter mécaniquement le fluide.

La membrane peut être définie par une partie de la paroi de support des actionneurs, cette paroi de support pouvant être une paroi de la chambre qui définit une surface extérieure de l'interface.

En variante, cette paroi de support est isolée de l'extérieur de l'interface, cette paroi étant par exemple recouverte par une contre-paroi, laquelle définit par exemple une surface extérieure de l'interface.

La contre-paroi éventuelle est flexible pour accompagner la déformation des parois délimitant la chambre.

L'interface peut comporter des anneaux de rigidification autour des membranes portant les actionneurs. Ces anneaux peuvent avoir une forme circulaire ou non, et être indépendants les uns des autres ou avoir des portions communes ou liées entre elles de façon à faciliter leur pose, les anneaux étant par exemple formés par les mailles d'une grille.

Chaque anneau de rigidification permet de restreindre spatialement l'étendue de la paroi mise en vibration par l'actionneur à la zone de la paroi qui est intérieure à l'anneau (c'est-à-dire située entre le contour intérieur de l'anneau et l'actionneur), et de bénéficier par conséquent d'une meilleure résolution spatiale de l'effet haptique généré.

Chaque anneau peut se situer sur la face de la paroi de support opposée à celle portant l'actionneur ou sur la même face; la présence de l'anneau sur la face opposée peut rendre plus facile les connexions électriques aux actionneurs.

Chaque anneau de rigidification peut encore se situer entre la paroi qui porte l'actionneur et la contre-paroi précitée.

L'anneau de rigidification est réalisé de préférence dans un matériau plus rigide que celui de la paroi de support, par exemple en un métal, une matière plastique dure, une céramique, un verre.

En variante, on peut réaliser l'anneau dans le même matériau que celui de la paroi de support. Le cas échéant, l'anneau présente une épaisseur sensiblement supérieure à la paroi de support, afin de présenter une rigidité supérieure à celle de la paroi, par exemple une rigidité 10 fois supérieure.

### Système de détection

De préférence, l'interface comporte un système de détection d'un contact de l'utilisateur sur la surface tactile, notamment un système à détection capacitive ou optique, le circuit de commande étant agencé pour contrôler les actionneurs en fonction de la position ainsi détectée.

Le système de détection peut encore utiliser pour cette détection au moins une partie des actionneurs. Dans ce cas, l'effet haptique peut être généré avec une partie seulement des actionneurs et/ou en alternant pour au moins une partie des actionneurs une phase de détection où l'on utilise l'actionneur comme un capteur de contact, et une phase de production de l'effet haptique, où l'on utilise l'actionneur pour générer une sollicitation mécanique.

Ainsi, lorsque l'interface présente des actionneurs sur la paroi définissant la surface tactile, au moins une partie de ces actionneurs peut avantageusement être utilisée pour détecter le contact.

L'interface peut comporter un système permettant de superposer au moins partiellement à la surface haptique une image, notamment un écran recouvert par la surface tactile. Un écran peut en variante être intégré à un dispositif annexe, par exemple des lunettes de réalité virtuelle, et l'effet haptique généré peut être synchronisé avec l'image projetée ou affichée.

### Applications

L'invention a encore pour objet un article, notamment article vestimentaire, en particulier en gant ou une veste, équipé d'une interface haptique selon l'invention.

L'interface peut encore comporter au moins un actuateur permettant de conformer sélectivement l'interface selon au moins deux formes distinctes. De préférence, l'interface comporte plusieurs actuateurs. La forme de l'interface peut être configurée pour correspondre à un objet dont l'image est visualisée simultanément par l'utilisateur, par exemple dans des lunettes de réalité virtuelle. Des effets haptiques simulant la texture de l'objet visualisé peuvent alors être générés sur la surface tactile de l'interface.

### Perception tactile

L'invention a encore pour objet un procédé pour générer au moins une perception tactile capable d'être ressentie par un utilisateur en contact avec une interface selon l'invention, comportant les étapes consistant à :
- détecter la position du contact de l'utilisateur sur la surface tactile flexible de l'interface grâce à un système de détection,
- moduler, grâce à un circuit de commande, les signaux envoyés aux actionneurs afin de faire varier localement la rigidité du fluide dans certaines zones de la chambre et générer un effet perceptible tactilement par l'utilisateur.

Le contact de l'utilisateur sur la surface tactile peut être détecté le cas échéant, comme mentionné plus haut, grâce à au moins une partie des actionneurs, notamment par effet piézoélectrique lorsque les actionneurs sont des actionneurs piézoélectriques.

La variation de rigidité générant une perception tactile peut donner dans certains cas l'impression à l'utilisateur de toucher une surface présentant un relief.

La perception tactile peut aussi être générée de manière à donner l'impression à l'utilisateur d'appuyer sur un bouton.

### Réalisation d'un actionneur

L'invention a encore pour objet un procédé de fabrication d'un actionneur de type piézoélectrique céramique utilisable dans une interface selon l'invention telle que définie plus haut, comportant les étapes consistant à :
- déposer au moins une première couche d'un matériau conducteur sur la face supérieure d'un support flexible, de préférence une feuille polymère flexible,
- fixer une céramique piézoélectrique sur la couche conductrice ainsi formée,
- déposer, notamment par impression à jet d'encre, une couche d'un matériau conducteur sur la céramique piézoélectrique,
- déposer une couche d'un isolant électrique, de préférence par impression, sur les couches précédemment déposées.

Le support flexible forme de préférence la paroi qui sert de support à plusieurs actionneurs, par exemple à la totalité d'entre eux, et peut définir une surface extérieure de l'interface ou être doublé extérieurement d'une contre-paroi.

Les actionneurs peuvent être réalisés individuellement, ou simultanément sur un même support.

La couche isolante recouvrant l'actionneur permet d'isoler électriquement l'actionneur du fluide. Elle peut recouvrir individuellement chaque actionneur ou en variante recouvrir continûment tous les actionneurs fixés sur un même support.

### Réalisation de l'interface

L'invention a encore pour objet un procédé de fabrication d'une interface telle que définie plus haut, comportant l'étape consistant à :
- assembler deux parois flexibles, notamment par soudure ou collage, de manière à former une chambre, au moins une des parois présentant des actionneurs sur l'une de ses faces.

La chambre ainsi obtenue est remplie avec un fluide non-newtonien. On peut par exemple créer une ouverture de remplissage lors de l'assemblage, que l'on ferme ensuite, par exemple par soudure ou par collage.

Les parois comportent ou sont par exemple des feuilles de polymères, notamment thermoplastiques, élastomères ou non. Les parois peuvent présenter une structure mono-matériau ou multi-matériau, cette structure pouvant être homogène spatialement ou à l'inverse comporter des amincissements locaux, des charnières plus souples, ...

La ou les parois peuvent présenter une structure multicouche afin d'intégrer un système de détection et/ou un écran, comme mentionné plus haut.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] représente de manière partielle et schématique un exemple d'interface haptique flexible selon l'invention,
[Fig 2] représente de manière partielle et schématique un exemple de paroi de l'interface servant de support aux actionneurs,
[Fig 3] illustre de manière partielle et schématique un exemple d'agencement des actionneurs,
[Fig 4] illustre de manière partielle et schématique un autre exemple d'agencement des actionneurs,
[Fig 5] représente de manière partielle et schématique un exemple d'interface haptique flexible équipé d'un écran et d'un haut-parleur,
[Fig 6] représente de manière partielle et schématique un exemple d'interface haptique flexible couplée à des lunettes de réalité virtuelle,
[Fig 7A] représente de manière partielle et schématique un exemple d'intégration d'un actionneur à une paroi de l'interface,
[Fig 7B] illustre de manière partielle et schématique la mise en vibration de la paroi sous-jacente à l'actionneur de la figure 7A lorsqu'il est actionné,
[Fig 8A] représente de manière partielle et schématique un exemple d'intégration d'un actionneur à une paroi munie d'un anneau de rigidification,
[Fig 8B] illustre de manière partielle et schématique la mise en vibration de la paroi sous-jacente à l'actionneur de la figure 8A lorsqu'il est actionné,
[Fig 9A] représente de manière partielle et schématique un exemple d'intégration d'un actionneur à une double paroi,
[Fig 9B] illustre de manière partielle et schématique la mise en vibration de la paroi sous-jacente à l'actionneur de la figure 9A lorsqu'il est actionné,
[Fig 10] représente de manière partielle et schématique un exemple d'interface comportant un réseau d'actionneurs intégré à une paroi selon le mode d'intégration de la figure 9A,
[Fig 11] est une vue de face, partielle et schématique, d'un actionneur de la figure 10,
[Fig 12] représente de manière partielle et schématique un exemple de réalisation d'une matrice d'actionneurs pouvant générer différentes perceptions tactiles,
[Fig 13] illustre de manière partielle et schématique la possibilité de générer un effet tactile de bouton à partir de la matrice d'actionneurs de la figure 12,
[Fig 14] illustre de manière partielle et schématique la possibilité de générer un effet tactile de relief à partir de la matrice de la figure 12,
[Fig 15], [Fig 16], [Fig 17] et [Fig 18] illustrent de manière partielle et schématique des étapes successives d'un exemple de procédé de fabrication d'un actionneur piézoélectrique céramique,
[Fig 19] illustre de manière partielle et schématique une étape d'un exemple de procédé de fabrication d'une interface selon l'invention,
[Fig 20] illustre de manière partielle et schématique une autre étape du procédé de fabrication,
[Fig 21] est un schéma en blocs illustrant un exemple de fonctionnement de l'interface haptique selon l'invention,
[Fig 22] illustre des exemples d'articles équipés d'une interface haptique flexible selon l'invention, et
[Fig 23] illustre la possibilité de modifier la forme de l'interface à l'aide d'actuateurs.

### Description détaillée

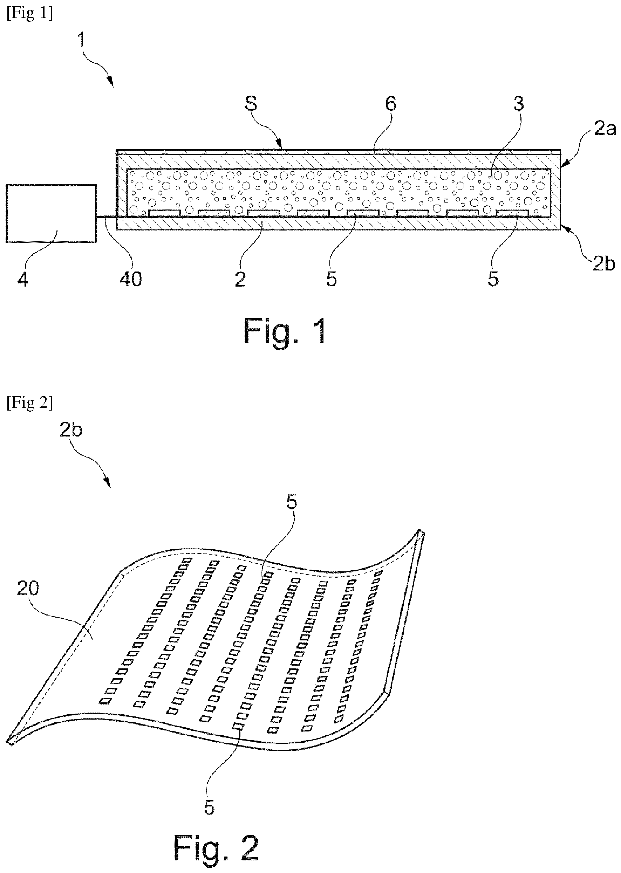

On a illustré à la figure 1 un exemple d'interface flexible 1 selon l'invention. L'interface 1 comporte une chambre 2, de forme aplatie dans l'exemple considéré, délimitée principalement par deux parois opposées flexibles 2a, 2b définissant chacune une face extérieure de l'interface.

La face extérieure de la paroi supérieure 2a définit une surface tactile S sur laquelle un utilisateur peut venir en contact, par exemple avec son doigt, et percevoir une sensation haptique générée par l'interface 1.

Dans l'exemple considéré, la surface S peut prendre une configuration sensiblement plane ou incurvée.

L'interface comporte un système de détection 6, par exemple un système capacitif connu de l'état de l'art, permettant la détection d'au moins un point de contact du doigt de l'utilisateur avec la surface S.

Le système de détection 6 peut faire partie de la paroi 2a ; il a été représenté à la figure 1 de manière schématique sous la forme d'une couche extérieure de la paroi 2a.

La chambre 2 est fermée et remplie par un fluide non-newtonien 3. Par « non-newtonien », on désigne un fluide qui ne se déforme pas proportionnellement à la force qu'on lui applique, notamment un fluide dont la viscosité dépend de la force exercée. Il peut s'agir par exemple d'un fluide rhéoépaississant, c'est-à-dire un fluide dont la viscosité augmente lorsqu'on lui applique une contrainte de cisaillement. En variante, il peut s'agir d'un fluide rhéofluidifiant, ou d'un fluide viscoplastique. Divers types de fluides non-newtonien peuvent être utilisés. Un fluide 3 rhéoépaississant est par exemple obtenu en mélangeant de l'eau et de la fécule de maïs aux bonnes proportions. De manière plus générale, de nombreux types de fluides comportant des particules suspendues dans un liquide ont des propriétés non-newtoniennes. Des fluides contenant des polymères, tels que certains shampooings, gels, décolorants, agents nettoyants ou encore des huiles multigrades auxquelles on rajoute des polymères, peuvent aussi présenter une rhéologie non-newtonienne.

La paroi inférieure 2b sert de support à une pluralité d'actionneurs 5 disposés sur la face intérieure de la paroi 2b de manière à être en contact avec le fluide 3. Les actionneurs 5 sont reliés à un circuit de commande 4 par des liaisons filaires 40.

Le circuit de commande 4 est configuré pour moduler les signaux envoyés aux actionneurs 5 afin que ceux-ci induisent mécaniquement en vibrant une modification de la viscosité du fluide 3, suffisante pour être perceptible tactilement par l'utilisateur sur la surface S. Les actionneurs 5 peuvent être actionnés individuellement, ou alternativement par groupe, selon le but poursuivi.

Le système de détection 6 est aussi relié au circuit de commande 4 afin de générer l'effet haptique sur la zone de contact détectée, si cela est souhaité.

Dans certains modes de réalisation, la paroi 2b servant de support aux actionneurs peut être définie par une feuille souple 20 telle qu'illustrée à la figure 2, par exemple une feuille d'un polymère, par exemple du polynaphtalate d'éthylène (PEN) ou du polycarbonate (PC). La feuille est par exemple d'épaisseur égale à 250 µm environ.

Dans l'exemple illustré à la figure 2, les actionneurs 5 sont répartis de manière régulière sur la feuille 20 de manière à former un réseau régulier, mais d'autres répartitions sont possibles, comme décrit ci-après.

Les actionneurs 5 peuvent tous être identiques et présenter les mêmes dimensions, comme illustré, ou au contraire présenter des dimensions et/ou des formes différentes. Selon l'application, on peut prévoir de grands actionneurs pour simuler de grands motifs dans certaines zones et de plus petits actionneurs dans d'autres zones pour avoir des effets haptiques mieux résolus spatialement dans ces autres zones.

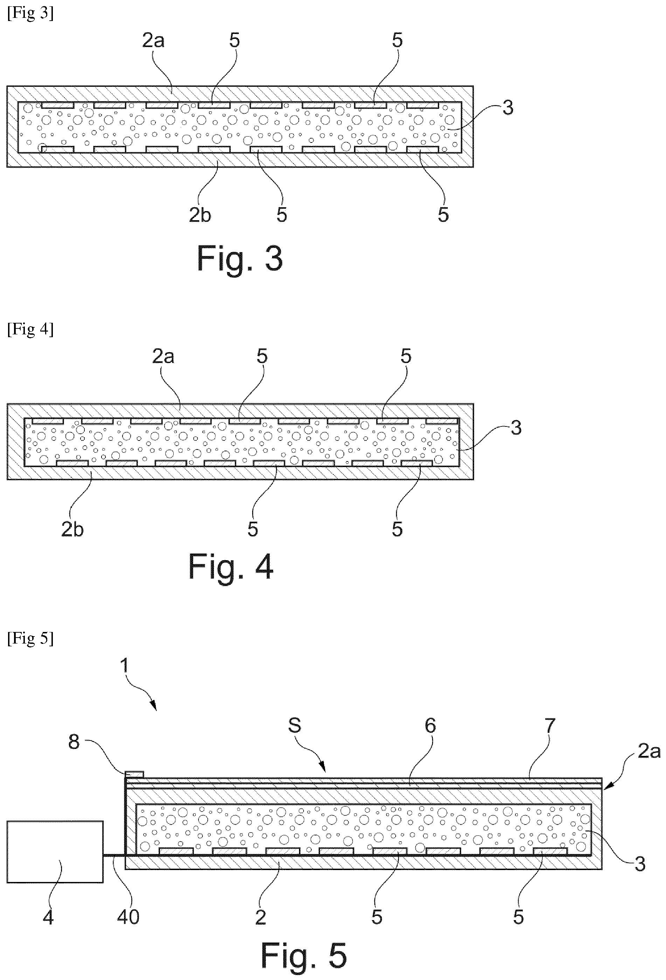

Les actionneurs 5 peuvent être disposés au sein de la chambre 2 sur plusieurs de ses parois, et selon diverses configurations. Ils peuvent par exemple se situer sur les deux parois principales opposées 2a et 2b de la chambre 2, de part et d'autre du fluide 3 et alignés en regard les uns des autres, tel qu'illustré à la figure 3. Une telle disposition permet d'augmenter l'effet mécanique des actionneurs 5 sur un volume donné de fluide 3.

Dans la variante illustrée à la figure 4, les actionneurs se situent de part et d'autre du fluide 3 de manière décalée, ce qui permet d'accroître la résolution spatiale de l'interface haptique et/ou de générer des effets haptiques plus complexes, selon les actionneurs mobilisés. Ce décalage peut se faire de manière à ce que les actionneurs supportés par la paroi 2a soient centrés par rapport au milieu des intervalles entre les actionneurs de la paroi opposée 2b, comme illustré. En variante, le pas entre les actionneurs sur la paroi 2a est différent de celui entre les actionneurs de la paroi 2b, par exemple un multiple de celui-ci. Le décalage peut encore se faire différemment.

L'interface 1 peut comporter un ou plusieurs dispositifs annexes permettant d'améliorer l'expérience de l'utilisateur, notamment d'en faire une expérience multisensorielle.

Dans l'exemple illustré à la figure 5, l'interface comporte un écran souple 7 qui permet de superposer une image à la surface tactile S et de par exemple donner l'impression à l'utilisateur de toucher virtuellement ce qu'il observe sur l'écran 7. Dans l'exemple considéré, l'écran 7 a été représenté de manière schématique comme recouvrant le système de détection 6, mais faisant partie de la paroi 2a. Dans une variante, l'écran 7 et/ou le système de détection 6 sont non intégrés à la paroi 2a de la chambre 2.

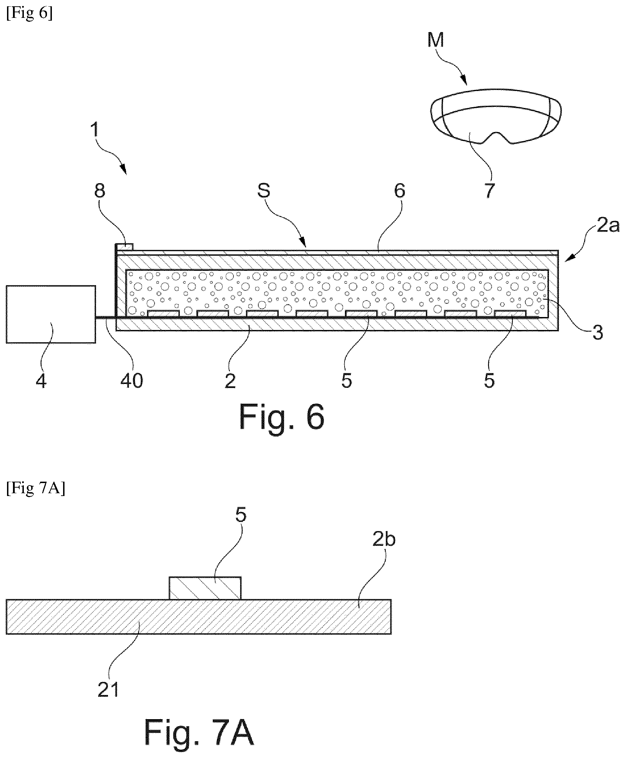

L'interface 1 peut en outre comporter un ou plusieurs haut-parleurs 8 pour adjoindre un effet sonore à l'expérience. En variante, l'écran d'affichage 7 est fixé à une monture M qui peut être portée par l'utilisateur, par exemple des lunettes de réalité virtuelle tel qu'illustré à la figure 6. Les images affichées sur l'écran 7 sont visibles par l'utilisateur qui peut simultanément venir en contact avec la surface tactile S, le circuit de commande 4 étant configuré pour permettre aux actionneurs 5 de générer un effet haptique en lien avec l'image projetée ou affichée dans la monture.

Les actionneurs 5 sont de préférence de type piézoélectrique. Lorsqu'un actionneur reçoit un signal électrique du circuit de commande 4, il peut se contracter ou s'allonger par effet piézoélectrique inverse, notamment dans la direction parallèle au support sur lequel il est fixé. Dans ce cas, le matériau piézoélectrique va induire un couple mécanique sur le support et donc par effet bilame engendrer alors un mouvement oscillatoire.

Le support de chaque actionneur 5 peut définir une membrane active 21. Cette dernière peut être formée par une partie de la paroi 2b de la chambre 2.

Le comportement vibratoire de l'actionneur 5 et de la membrane active 21 sous-jacente dépend de la manière dont l'actionneur est intégré à son support. Cette intégration peut se faire selon plusieurs configurations, et le comportement vibratoire correspondant peut être simulé grâce à un logiciel de calcul par éléments finis, comme par exemple le logiciel COMSOL, ou tout autre logiciel adapté. Plusieurs exemples de configurations sont décrits ci-dessous, ainsi que le comportement vibratoire de la membrane associée.

Dans la configuration illustrée à la figure 7A, l'actionneur 5 est fixé sur une paroi de support 2b qui définit une surface extérieure de l'interface 1.

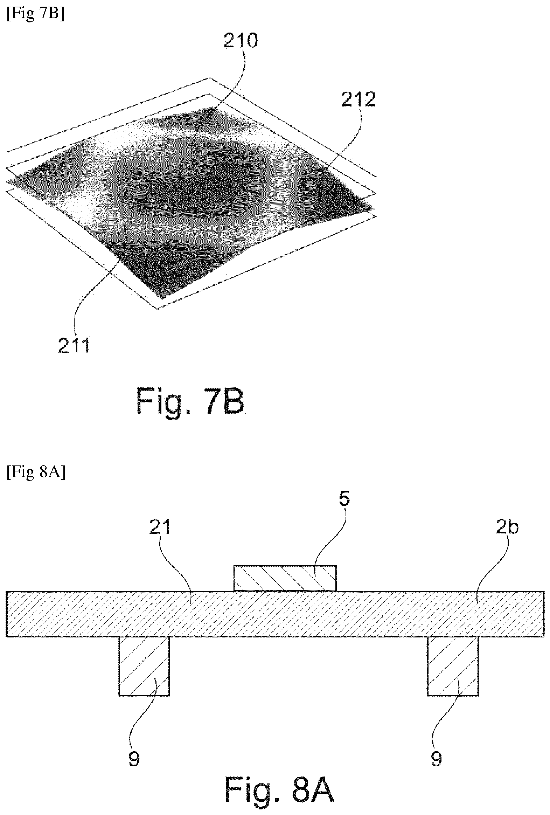

Dans cette configuration et comme illustré à la figure 7B, la vibration de l'actionneur 5 engendre un déplacement relativement important de la membrane 21 dans une zone centrale 210 située sous l'actionneur. Une zone 211 entourant la zone centrale 210 ne marque pas de déplacement particulier. En revanche, des déplacements parasites de la paroi 2b sont visibles au-delà de la zone 211, dans des zones éloignées 212. Ces déplacements parasites ne sont pas souhaitables car ils engendrent une sollicitation peu localisée du fluide non-newtonien, et donc affectent la résolution spatiale de l'effet haptique.

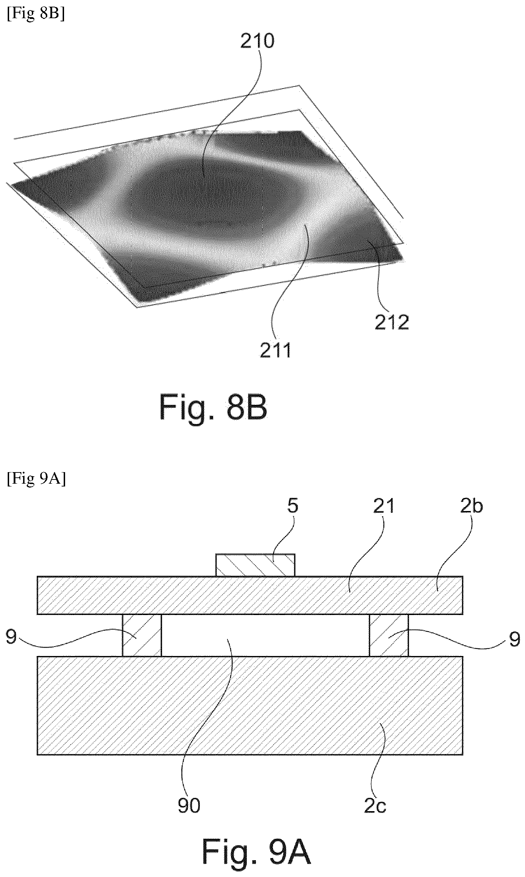

L'ajout d'un anneau de rigidification 9 sous la paroi 2b délimitant le contour de la membrane active 21, tel qu'illustré à la figure 8A, permet de limiter l'amplitude des mouvements parasites dans les zones 212, même s'ils restent encore visibles sur la figure 8B. L'anneau de rigidification est par exemple en cuivre, aluminium, plastique dur, ou tout autre matériau adapté.

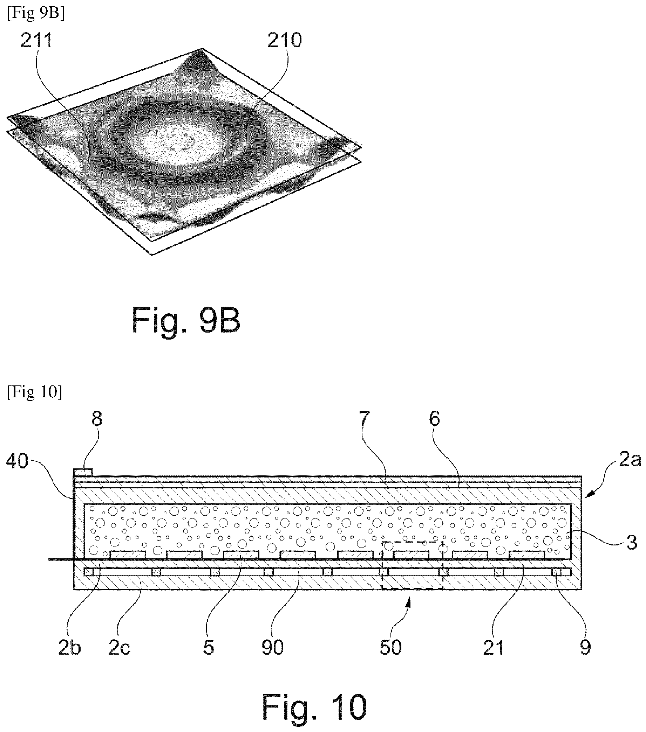

Dans la variante illustrée à la figure 9A, on ajoute une paroi extérieure 2c, encore appelée contre-paroi, l'anneau de rigidification 9 étant solidaire des parois 2b et 2c et jouant le rôle d'une entretoise entre celles-ci. Dans cette variante, la membrane 21 est tenue à distance de la paroi 2c grâce à l'anneau de rigidification 9, et une lame d'air 90 peut être présente entre les parois 2b et 2c. Dans cette configuration, le déplacement de la paroi 2b sous l'action de la vibration de l'actionneur 5 est restreint à la zone centrale 210 où se situe l'actionneur, et les mouvements parasites de la paroi 2b sont pratiquement absents, comme illustré à la figure 9B.

A titre d'exemple, pour une paroi 2b en PEN d'épaisseur de l'ordre de 250 µm et un actionneur piézoélectrique en titano-zirconate de plomb (PZT) d'épaisseur de l'ordre de 30 µm et de rayon d'environ 2500 µm, il est possible d'obtenir une déformation de la membrane 21 de l'ordre de 5 µm lorsqu'on soumet l'actionneur 5 à une tension alternative de 50V à une fréquence de 1.82 kHz. A cette fréquence, le fluide non-newtonien 3 est sollicité localement suffisamment pour durcir et générer par exemple une perception de « pseudo-relief » sur la surface tactile S de l'interface 1.

Les déplacements parasites de la paroi sous-jacente aux actionneurs peuvent être diminués autrement que par l'ajout d'un élément de rigidification 9 et d'une contre-paroi 2c ; on peut notamment y parvenir en actionnant des actionneurs voisins avec un déphasage dépendant de la distance entre les actionneurs, notamment en opposition de phase.

On a représenté à la figure 10 une pluralité d'actionneurs 5 intégrés selon la configuration précédente avec contre-paroi 2c. Cette dernière définit dans cet exemple une surface extérieure de l'interface.

L'épaisseur de la paroi 2c est par exemple de 500 µm. Une épaisseur plus importante permet de limiter substantiellement les mouvements parasites de la paroi 2b mentionnés précédemment, mais peut en retour réduire la flexibilité globale de l'interface 1.

L'épaisseur de la paroi 2c peut être choisie lors de la réalisation de l'interface 1 selon l'application considérée et l'effet haptique recherché.

A titre d'exemple, l'épaisseur relative de la paroi 2c par rapport à la paroi 2b est d'un facteur 10

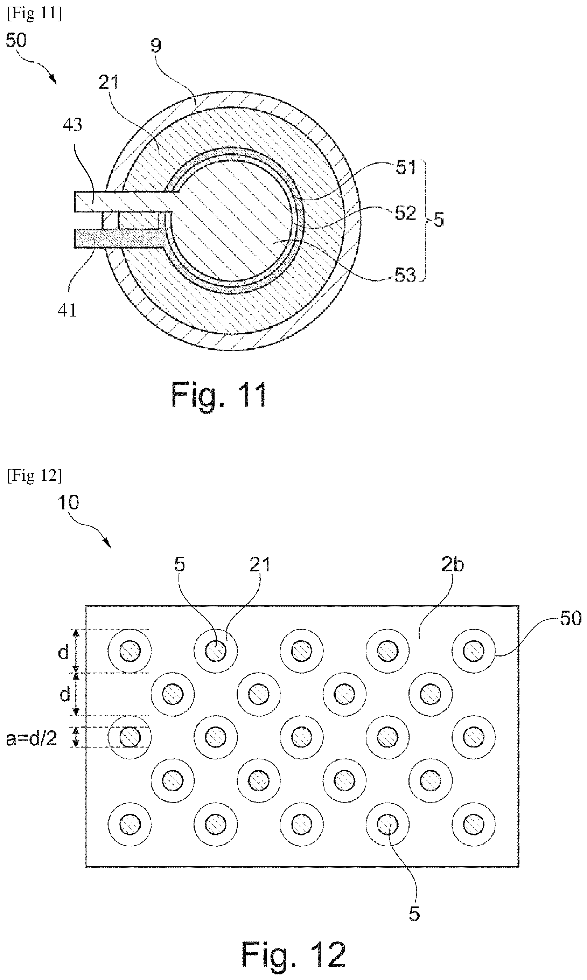

L'actionneur 5 peut être de différentes formes, par exemple circulaire, tel qu'illustré à la figure 11. Dans cet exemple, l'actionneur 5 comporte une électrode inférieure 51 reliée au circuit de commande 4 par une piste conductrice 41, par exemple métallique, une couche active 52 par exemple en matériau piézoélectrique ou ferroélectrique, et une électrode supérieure 53 reliée au circuit commande 4 par une piste conductrice 43, par exemple métallique. Les électrodes 51 et 53 sont de préférence isolées l'une de l'autre par une couche de passivation (non représentée).

Comme décrit précédemment, l'actionneur 5 peut être supporté par une membrane active 21.

Lorsqu'un actionneur 5 reçoit un signal du circuit de commande 4, une différence de potentiel est appliquée entre les électrodes 51 et 53. Le signal reçu par l'actionneur 5 est par exemple un signal complexe alternatif. La différence de potentiel appliquée engendre une déformation de la couche active 52, notamment par effet piézoélectrique inverse, ce qui entraine un déplacement de la membrane active 21.

On a représenté à la figure 12 un exemple de matrice 10 d'actionneurs 5. Par « matrice », on désigne une structure d'un seul tenant portant plusieurs actionneurs, identiques ou non. La matrice 10 est par exemple rectangulaire et de dimensions par exemple de quelques centimètres de côté.

Les actionneurs 5 sont dans cet exemple identiques, chacun de forme circulaire et répartis de manière uniforme sur la matrice 10, en quinconce. La membrane active 21 de chaque actionneur 5 est par exemple de forme circulaire.

Dans d'autres modes de réalisation, la membrane active 21 est de forme non circulaire, par exemple polygonale, notamment carrée, rectangle, ou toute autre forme appropriée, 2D ou 3D, la membrane pouvant être de forme convexe ou concave.

Le diamètre *a* de l'actionneur 5 (c'est-à-dire de façon générale sa plus grande dimension) est par exemple de 2500 µm et de l'ordre de 50% du diamètre d de la membrane active 21, ce ratio étant avantageux pour une bonne déformation de la membrane, comme décrit dans l'article de Casset, F., et al. "Piezoelectric membrane actuator design." (12th Intl. Conf. on Thermal, Mechanical & Multi-Physics Simulation and Experiments (Eurosime) 2011).

Les membranes actives 21 sont par exemple séparées entre elle d'une distance d'égale au diamètre de membrane 21, cette distance de séparation étant avantageuse pour permettre une bonne résolution spatiale de l'effet haptique généré.

Dans d'autres exemples de réalisation, la distance de séparation entre les membranes et/ou le nombre de membranes sur la matrice 10 sont différents. On peut encore avoir une unique membrane isolée.

Le diamètre de la membrane 21 est par exemple de l'ordre de 10 µm à 100 000 µm. Les actionneurs 5 comportent par exemple une couche active en titano-zirconate de plomb (PZT), et leur épaisseur est par exemple de 30 µm.

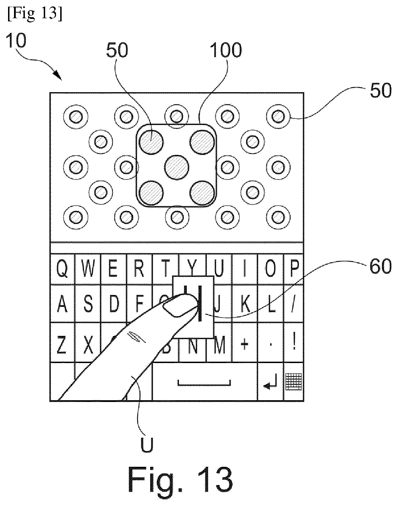

Dans l'exemple illustré à la figure 13, un groupe d'actionneurs 100 disposé sur la matrice 10 est actionné par le circuit de commande 4 afin de générer une perception tactile 60 d'un « effet de bouton », c'est-à-dire donnant l'impression à l'utilisateur d'appuyer sur une touche de clavier.

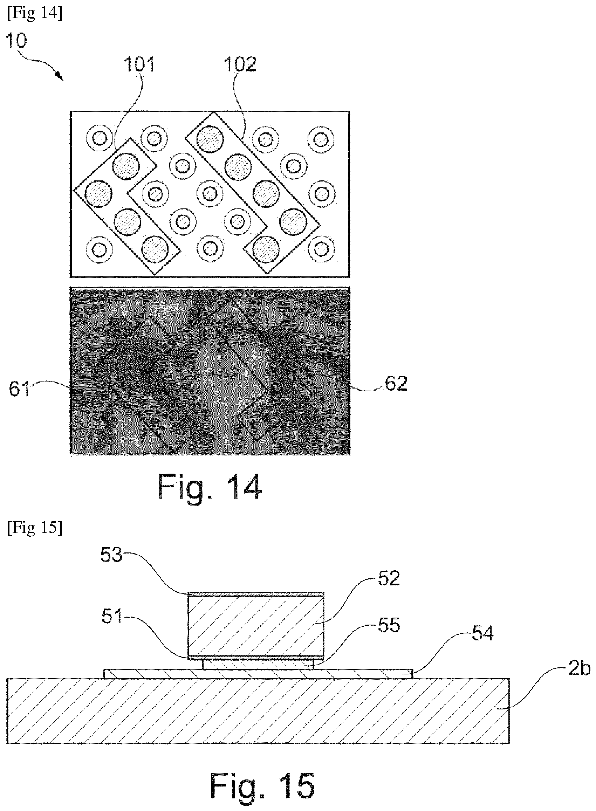

Dans un autre exemple illustré à la figure 14, plusieurs groupes d'actionneurs 101 et 102 sont actionnés simultanément ou alternativement afin de générer des perceptions tactiles 61 et 62 d'un effet de pseudo-relief, c'est-à-dire donnant l'impression à l'utilisateur qui déplace son doigt au contact de l'interface d'effleurer des reliefs, par exemple la crête d'une montagne d'une carte affichée sur un écran.

Dans les exemples qui viennent d'être décrits, les actionneurs 5 d'un même groupe peuvent être modulés selon une amplitude d'actionnement identique pour tous les actionneurs du groupe, ou propre à chaque actionneur, selon l'effet recherché.

Un actionneur 5 piézoélectrique peut être réalisé suivant les étapes illustrées aux figures 15 à 18.

On dépose d'abord, par exemple par sérigraphie, une première couche 54 d'un matériau conducteur électrique, par exemple de l'argent, sur la face supérieure d'un support souple 2b afin de former la piste d'alimentation électrique de l'actionneur 5, éventuellement sous forme de plot. Comme décrit précédemment, le support souple 2b est par exemple une feuille d'un polymère de type PEN, PC, PMMA, polyamide, SiNR ou tout autre matériau adapté. Le support 2b peut aussi comporter plusieurs couches de plusieurs polymères. Son épaisseur est par exemple de 80 µm. La couche 54 est par exemple d'épaisseur 0.5 µm.

On dépose ensuite sur la couche 54 une céramique piézoélectrique comportant une électrode inférieure 51, une couche piézoélectrique 52 et une électrode supérieure 53. La céramique piézoélectrique est par exemple une céramique piézoélectrique commerciale en titano-zirconate de plomb (PZT). Cette dernière peut notamment être amincie et ajustée à une épaisseur souhaitée.

Comme illustré à la figure 15, l'électrode inférieure 51 de la céramique piézoélectrique peut être connectée à la piste 54 grâce à une couche de colle conductrice 55, par exemple une pâte d'argent, par exemple d'épaisseur 40 µm environ. La déformation de la couche piézoélectrique 52 sous l'effet d'une différence de potentiel appliquée entre les électrodes est transmise au support 2b par effet unimorphe via la couche 55.

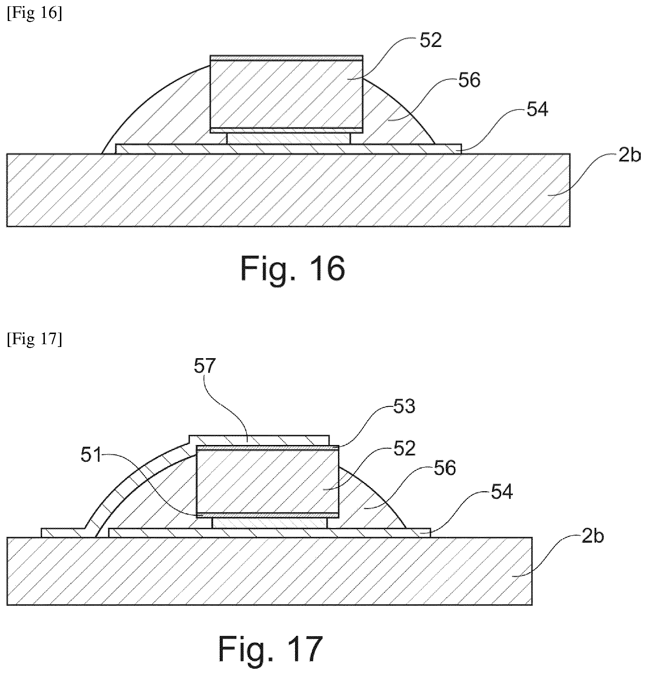

On recouvre ensuite une partie de la céramique piézoélectrique avec une couche d'isolation électrique 56, par exemple faite d'un cordon de polymère, comme illustré à la figure 16. La couche d'isolation 56 permet de pouvoir déposer par impression à jet d'encre ou autre méthode adaptée, une piste conductrice 57 connectée à l'électrode supérieure 53 en évitant les court-circuits, notamment avec l'électrode 51, comme illustré à la figure 17. La piste 57 peut être sous forme de plot, le cas échéant. La couche 57 est par exemple d'épaisseur 0.5 µm.

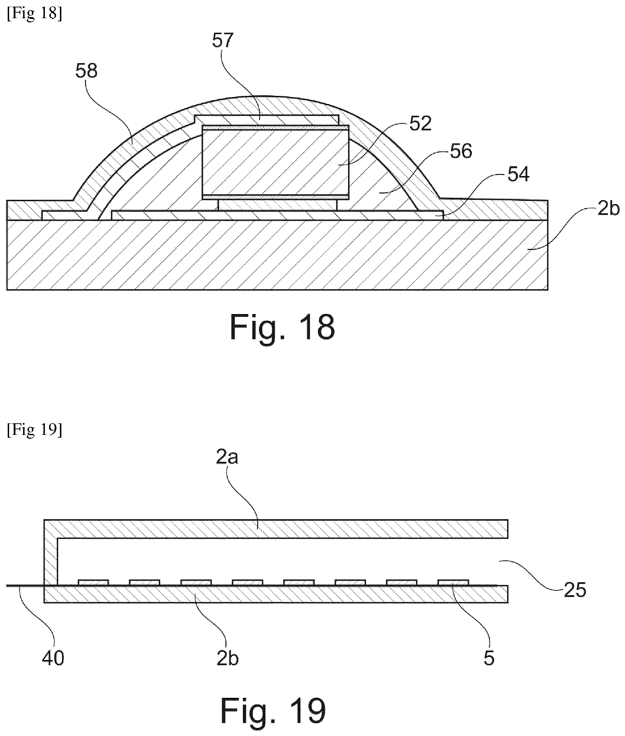

Enfin, à l'étape illustrée à la figure 18, l'actionneur est isolé électriquement du fluide 3 grâce à une couche d'isolation 58, par exemple en silicone. Les pistes (non représentées) reliées aux électrodes 51 et 53 permettent l'actionnement des actionneurs 5 par le circuit de commande.

Un anneau de rigidification 9 peut être rajouté et fixé, notamment par collage, sur la face arrière du support souple 2b, si cela est souhaité. La couche d'isolation 58 peut recouvrir continûment l'ensemble des actionneurs supportés par le support 2b.

Comme décrit plus haut, il est possible d'obtenir une interface haptique selon l'invention en assemblant deux feuilles souples 20 formant respectivement les deux parois opposées flexibles 2a et 2b de la chambre 2.

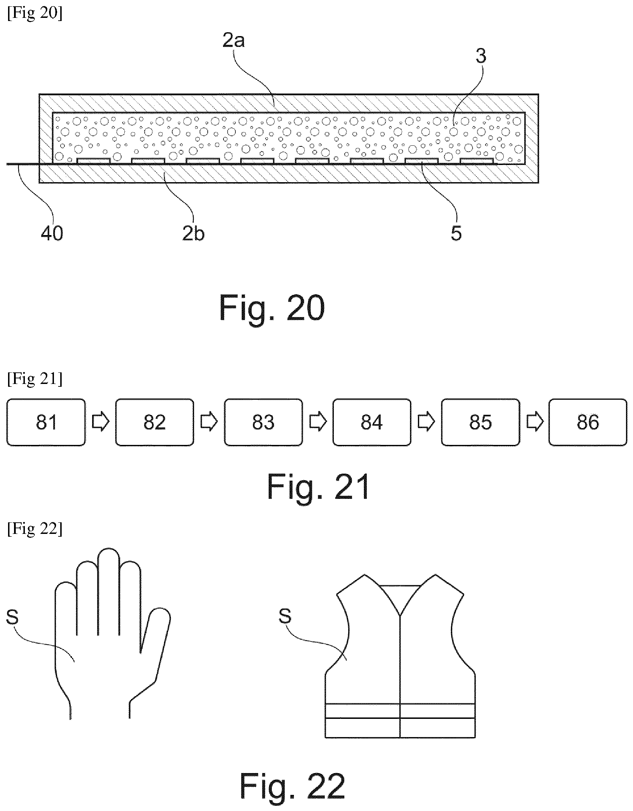

Dans l'exemple de fabrication d'une telle interface illustré à la figure 19, on laisse dans un premier temps une ouverture de remplissage 25 lors de l'assemblage des feuilles 20. Cela permet d'introduire le fluide non-newtonien 3, par exemple grâce à une seringue ou par tout autre moyen d'injection adapté. On ferme ensuite l'ouverture 25, par exemple par soudage ou collage, pour obtenir l'interface haptique flexible illustrée à la figure 20.

Après remplissage et fermeture, l'épaisseur du fluide 3 peut être sensiblement constante dans la chambre 2, par exemple de l'ordre de plusieurs centaines de µm à plusieurs mm, par exemple 3mm.

Une interface haptique 1 selon l'invention peut fonctionner selon les étapes décrites à la figure 21.

A l'étape 81, l'interface haptique est en veille, en l'absence d'un utilisateur en contact avec la surface tactile S, et le fluide non-newtonien présente des propriétés rhéologiques uniformes sous toute la surface tactile S.

A l'étape 82, le système de détection 6, par exemple réalisé avec une partie des actionneurs 5 ou avec n'importe quel autre système de détection adapté, par exemple capacitif, détecte au moins un point de contact de l'utilisateur avec la surface S et le circuit de commande 4 détermine l'endroit où doit être généré(s) le ou les effets haptiques.

A l'étape 83, le circuit de commande 4 envoie les signaux de commande appropriés pour actionner au moins une partie des actionneurs 5 de façon à générer l'effet haptique désiré.

A l'étape 84, les actionneurs 5 concernés se contractent ou s'allongent par effet piézoélectrique inverse selon une amplitude d'actionnement correspondant au signal reçu, entrainant la membrane active 21 qui leur est sous-jacente dans un mouvement oscillatoire.

A l'étape 85, le fluide 3 à proximité des membranes 21 voit sa viscosité varier en fonction de l'amplitude de vibration, ce qui génère une modification des propriétés rhéologiques, par exemple un durcissement local du fluide, perceptible par l'utilisateur sur la surface S.

A l'étape 86, l'utilisateur rompt le contact avec la surface tactile S et l'interface peut se remettre en veille, si l'on souhaite économiser l'énergie par exemple.

L'interface 1 selon l'invention peut être intégrée à un article vestimentaire, par exemple un gant ou un gilet, comme illustré à la figure 22.

Bien entendu, l'invention n'est pas limitée aux exemples qui viennent d'être décrits.

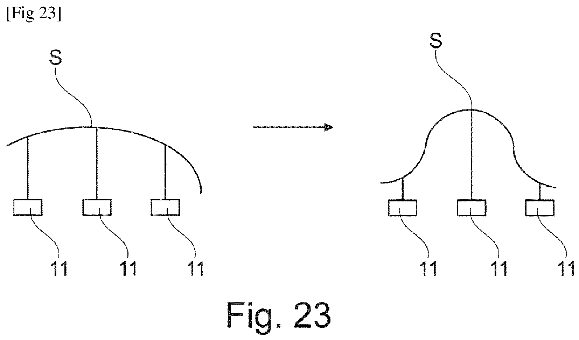

Par exemple, l'interface 1 peut comporter une surface tactile, et/ou un système de détection 6, sur plusieurs de ses parois, ou même sur l'ensemble de sa ou ses faces extérieures. La chambre 2 peut avoir une autre forme que celle décrite ci-dessus ; elle est par exemple de forme sphérique ou cylindrique, ou encore changer de forme selon l'effet haptique recherché, l'interface 1 pouvant être un objet tangible reconfigurable, comme illustré à la figure 23. Sur cette figure, on voit que l'interface peut être couplée mécaniquement à un ou plusieurs actuateurs 11 qui permettent de la déformer pour lui donner une forme prédéfinie, correspondant à celle de l'objet que l'on cherche à simuler tactilement.

Les actionneurs 5 peuvent être de toute taille et de toute forme. Des ensembles d'actionneurs de tailles différentes sont par exemple disposés selon une répartition concentrique sur une paroi de l'interface. De nombreux actionneurs de petite taille, par exemple d'une vingtaine de µm de largeur, peuvent être utilisés afin d'obtenir une haute résolution spatiale.

L'anneau de rigidification 9 n'est pas nécessairement de forme circulaire ; il peut être de toute forme adaptée choisie en fonction par exemple de la position des nœuds et ventres de vibration de la paroi portant l'actionneur.

L'interface peut fonctionner autrement que par un durcissement local du fluide 3 dans les zones où les actionneurs sont utilisés ; le fonctionnement peut être adapté à un fluide rhéofluidifiant, dont la viscosité diminue sous l'effet des actionneurs.

Les actionneurs peuvent être réalisés autrement que par le procédé de fabrication décrit ci-dessus. Par exemple, la couche active 52 est réalisée par reports de films minces de matériaux piézoélectriques ou ferroélectriques, notamment en titano-zirconate de plomb (PZT), nitrure d'aluminium (AIN) ou en niobate de lithium (LNO), ou encore en multicouche de polymères électro actifs, tel que le polyfluorure de vinylidène (PVDF).

## Revendications

1. Interface haptique flexible (1), comportant :
- une chambre (2) contenant un fluide non newtonien (3) et délimitée au moins partiellement par une paroi flexible (2a) dont la face extérieure définit une surface tactile (S) susceptible d'être contactée par un utilisateur,
- une pluralité d'actionneurs (5) portés par un support flexible (2b) et disposés de manière à transmettre une excitation mécanique locale au fluide (3), et
- un circuit de commande (4) relié aux actionneurs (5) et configuré pour moduler les signaux envoyés aux actionneurs afin d'induire mécaniquement une modification de la rhéologie du fluide et générer une sensation haptique perceptible par l'utilisateur sur la surface tactile (S).

2. Interface selon la revendication 1, la chambre (2) ayant une forme générale aplatie.

3. Interface selon l'une quelconque des revendications 1 ou 2, la chambre (2) ayant une épaisseur sensiblement constante.

4. Interface selon l'une quelconque des revendications précédentes, la chambre étant formée entre au moins deux parois opposées flexibles (2a ; 2b), dont l'une d'elles au moins définit la surface tactile (S), notamment des parois comportant ou définies par des feuilles souples (20).

5. Interface selon l'une quelconque des revendications précédentes, la ou les parois (2a, 2b) définissant la surface tactile (S) et servant de support aux actionneurs (5) permettant une flexion d'ensemble de la chambre (2) autour d'au moins un axe, mieux dans toutes les directions.

6. Interface selon l'une quelconque des revendications précédentes, les actionneurs (5) étant au contact du fluide (3).

7. Interface selon l'une quelconque des revendications précédentes, les actionneurs (5) étant repartis avec un espacement régulier dans au moins une direction, mieux dans deux directions.

8. Interface selon l'une des revendications précédentes, chaque actionneur (5) étant porté par une membrane active (21) susceptible de vibrer sous l'action de l'actionneur, la vibration de la membrane sollicitant mécaniquement le fluide (3) dans la zone adjacente à l'actionneur, la membrane (21) étant de préférence définie par au moins une partie d'une paroi (2b) servant de support aux actionneurs (5), ladite paroi définissant une surface extérieure de l'interface (1) ou ladite paroi (2b) étant recouverte par une contre-paroi (2c), ladite contre-paroi définissant de préférence une surface extérieure de l'interface (1).

9. Interface selon la revendication 8, comportant des anneaux de rigidification (9) autour des membranes (21) des actionneurs (5), de préférence situés sur la face de la paroi de support (2b) opposée à celle portant les actionneurs (5).

10. Interface selon l'une quelconque des revendications 1 à 9, comportant un système de détection (6) d'un contact de l'utilisateur sur la surface tactile (S), notamment un système de détection capacitive ou optique, le circuit de commande (4) étant agencé pour contrôler les actionneurs (5) en fonction de la position ainsi détectée et/ou un système (7) permettant de superposer au moins partiellement à la surface haptique une image, notamment un écran recouvert par la surface tactile et/ou au moins un actuateur (11) permettant de conformer sélectivement l'interface selon au moins deux formes distinctes.

11. Procédé pour générer au moins une perception tactile capable d'être ressentie par un utilisateur en contact avec une interface telle que définie dans l'une quelconque des revendications 1 à 10, comportant les étapes consistant à :
- Détecter la position du contact de l'utilisateur sur la surface tactile flexible de l'interface grâce à un système de détection,
- moduler, grâce à un circuit de commande (4), les signaux envoyés aux actionneurs (5) afin de faire varier localement la rigidité du fluide dans certaines zones de la chambre et générer un effet perceptible tactilement par l'utilisateur.

12. Procédé selon la revendication précédente, le contact de l'utilisateur sur la surface tactile étant détecté grâce à au moins une partie des actionneurs, notamment par effet piézoélectrique.

13. Procédé selon l'une des revendications 11 et 12, la variation de rigidité générant une perception tactile donnant l'impression à l'utilisateur de toucher une surface présentant du relief.

14. Procédé de fabrication d'une interface telle que définie dans l'une quelconque des revendications 1 à 10, comportant la fabrication d'un actionneur, de la pluralité d'actionneurs, de type piézoélectrique céramique par les étapes consistant à :
- déposer au moins une première couche (54) d'un matériau conducteur sur la face supérieure d'un support flexible (2b), de préférence une feuille polymère flexible,
- fixer une céramique piézoélectrique (51) sur la couche conductrice ainsi formée,
- déposer, notamment par impression à jet d'encre, une couche d'un matériau conducteur (57) sur la céramique piézoélectrique,
- déposer une couche d'un isolant électrique (58), de préférence déposé par impression, sur les couches précédemment déposées.

15. Procédé de fabrication d'une interface telle que définie dans l'une quelconque des revendications 1 à 10, comportant l'étape consistant à :
Assembler deux desdites parois flexibles (2a, 2b), notamment par soudure ou collage, de manière à former la chambre (2), au moins l'une des parois présentant lesdits actionneurs (5) sur l'une de ses faces.

## Patentansprüche

1. Flexible haptische Schnittstelle (1), umfassend:
- eine Kammer (2), die ein nichtnewtonsches Fluid (3) enthält und mindestens teilweise durch eine flexible Wand (2a) begrenzt wird, deren Außenseite eine taktile Oberfläche (S) definiert, die geeignet ist, von einem Benutzer kontaktiert zu werden,
- eine Mehrzahl von Aktoren (5), die von einem flexiblen Träger (2b) getragen werden und so angeordnet sind, dass sie eine lokale mechanische Anregung auf das Fluid (3) übertragen, und
- eine Steuerschaltung (4), die mit den Aktoren (5) verbunden ist und dazu ausgestaltet ist, die an die Aktoren gesendeten Signale zu modulieren, um mechanisch eine Änderung der Rheologie des Fluids zu bewirken und eine von dem Benutzer auf der taktilen Oberfläche (S) wahrnehmbare haptische Empfindung zu erzeugen.

2. Schnittstelle nach Anspruch 1, wobei die Kammer (2) eine abgeflachte Grundform hat.

3. Schnittstelle nach einem der Ansprüche 1 oder 2, wobei die Kammer (2) eine im Wesentlichen konstante Dicke hat.

4. Schnittstelle nach einem der vorhergehenden Ansprüche, wobei die Kammer zwischen mindestens zwei entgegengesetzten flexiblen Wänden (2a; 2b) gebildet wird, von denen mindestens eine die taktile Oberfläche (S) definiert, insbesondere Wänden, die biegsame Folien (20) umfassen oder dadurch definiert werden.

5. Schnittstelle nach einem der vorhergehenden Ansprüche, wobei die Wand oder Wände (2a, 2b), die die taktile Oberfläche (S) definieren und den Aktoren (5) als Träger dienen, eine Gesamtbiegung der Kammer (2) um mindestens eine Achse, besser in alle Richtungen, ermöglichen.

6. Schnittstelle nach einem der vorhergehenden Ansprüche, wobei die Aktoren (5) in Kontakt mit dem Fluid (3) sind.

7. Schnittstelle nach einem der vorhergehenden Ansprüche, wobei die Aktoren (5) in mindestens eine Richtung, besser in zwei Richtungen, mit einem regelmäßigen Abstand verteilt sind.

8. Schnittstelle nach einem der vorhergehenden Ansprüche, wobei jeder Aktor (5) von einer aktiven Membran (21) getragen wird, die geeignet ist, unter der Einwirkung des Aktors zu vibrieren, wobei die Vibration der Membran das Fluid (3) in dem an den Aktor angrenzenden Bereich mechanisch beansprucht, wobei die Membran (21) bevorzugt durch mindestens einen Teil einer Wand (2b) definiert wird, die den Aktoren (5) als Träger dient, wobei die Wand eine Außenoberfläche der Schnittstelle (1) definiert oder wobei die Wand (2b) von einer Gegenwand (2c) bedeckt wird, wobei die Gegenwand bevorzugt eine Außenoberfläche der Schnittstelle (1) definiert.

9. Schnittstelle nach Anspruch 8, umfassend Aussteifungsringe (9) um die Membranen (21) der Aktoren (5), die bevorzugt auf der Seite der Trägerwand (2b) gelegen sind, die entgegengesetzt zu der die Aktoren (5) tragenden ist.

10. Schnittstelle nach einem der Ansprüche 1 bis 9, umfassend ein Detektionssystem (6) zum Detektieren eines Kontakts des Benutzers auf der taktilen Oberfläche (S), insbesondere ein kapazitives oder optisches Detektionssystem, wobei die Steuerschaltung (4) dazu ausgebildet ist, die Aktoren (5) in Abhängigkeit von der so detektierten Position zu steuern, und/oder ein System (7), das es ermöglicht, der haptischen Schnittstelle mindestens teilweise ein Bild zu überlagern, insbesondere einen durch die taktile Oberfläche bedeckten Bildschirm, und/oder mindestens einen Aktuator (11), der es ermöglicht, die Schnittstelle selektiv gemäß mindestens zwei verschiedenen Formen zu formen.

11. Verfahren zum Erzeugen mindestens einer taktilen Wahrnehmung, die von einem Benutzer beim Kontakt mit einer wie in einem der Ansprüche 1 bis 10 definierten Schnittstelle verspürt werden kann, umfassend die folgenden Schritte:
- Detektieren der Position des Kontakts des Benutzers auf der flexiblen taktilen Oberfläche mithilfe eines Detektionssystems,
- Modulieren, mithilfe einer Steuerschaltung (4), der an die Aktoren (5) gesendeten Signale, um die Steifigkeit des Fluids in bestimmten Bereichen der Kammer lokal variieren zu lassen und einen von dem Benutzer taktil wahrnehmbaren Effekt zu erzeugen.

12. Verfahren nach dem vorhergehenden Anspruch, wobei der Kontakt des Benutzers auf der taktilen Oberfläche mithilfe mindestens eines Teils der Aktoren, insbesondere durch piezoelektrischen Effekt, detektiert wird.

13. Verfahren nach einem der Ansprüche 11 und 12, wobei die Steifigkeitsänderung eine taktile Wahrnehmung erzeugt, die dem Benutzer den Eindruck vermittelt, eine ein Relief aufweisende Oberfläche zu berühren.

14. Verfahren zur Herstellung einer wie in einem der Ansprüche 1 bis 10 definierten Schnittstelle, umfassend die Herstellung eines Aktors, der Mehrzahl von Aktoren, vom piezoelektrischen keramischen Typ durch die folgenden Schritte:
- Aufbringen mindestens einer ersten Schicht (54) eines leitenden Materials auf die Oberseite eines flexiblen Trägers (2b), bevorzugt einer flexiblen Polymerfolie,
- Fixieren einer piezoelektrischen Keramik (51) auf der so gebildeten leitenden Schicht,
- Aufbringen, insbesondere durch Tintenstrahldruck, einer Schicht aus einem leitenden Material (57) auf die piezoelektrische Keramik,
- Aufbringen einer Schicht aus einem elektrischen Isolierstoff (58), der bevorzugt durch Drucken aufgebracht wird, auf die zuvor aufgebrachten Schichten.

15. Verfahren zur Herstellung einer wie in einem der Ansprüche 1 bis 10 definierten Schnittstelle, umfassend die folgenden Schritte:
Verbinden von zweien der flexiblen Wände (2a, 2b), insbesondere durch Schweißen oder Kleben, so dass die Kammer (2) gebildet wird, wobei mindestens eine der Wände die Aktoren (5) auf einer ihrer Seiten aufweist.

## Claims

1. Flexible haptic interface (1), comprising:
- a chamber (2) containing a non-Newtonian fluid (3) and bounded at least partially by a flexible wall (2a) the exterior face of which defines a touch surface (S) capable of being touched by a user,
- a plurality of actuators (5) borne by a flexible carrier (2b) and placed so as to transmit a local mechanical excitation to the fluid (3), and
- a control circuit (4) connected to the actuators (5) and configured to modulate the signals sent to the actuators in order to mechanically induce a modification of the rheology of the fluid and to generate a haptic sensation perceptible by the user on the touch surface (S) .

2. Interface according to Claim 1, the chamber (2) having a flat general shape.

3. Interface according to either one of Claims 1 and 2, the chamber (2) having a substantially constant thickness.

4. Interface according to any one of the preceding claims, the chamber being formed between at least two opposite flexible walls (2a; 2b), one at least of which walls defines the touch surface (S), and especially walls comprising or defined by flexible sheets (20).

5. Interface according to any one of the preceding claims, the one or more walls (2a, 2b) defining the touch surface (S) and serving as carrier for the actuators (5) allowing the whole chamber (2) to be bent about at least one axis, and better still in every direction.

6. Interface according to any one of the preceding claims, the actuators (5) making contact with the fluid (3).

7. Interface according to any one of the preceding claims, the actuators (5) being distributed with a regular spacing in at least one direction, and better still in two directions.

8. Interface according to one of the preceding claims, each actuator (5) being borne by an active membrane (21) capable of vibrating under the action of the actuator, the vibration of the membrane acting mechanically on the fluid (3) in the region adjacent the actuator, the membrane (21) preferably being defined by at least one portion of a wall (2b) serving as carrier for the actuators (5), said wall defining an exterior surface of the interface (1) or said wall (2b) being covered by a counter-wall (2c), said counter-wall preferably defining an exterior surface of the interface (1).

9. Interface according to Claim 8, comprising stiffening rings (9) around the membranes (21) of the actuators (5), which rings are preferably located on the face of the carrying wall (2b) opposite the face bearing the actuators (5).

10. Interface according to any one of Claims 1 to **9,** comprising a system (6) for detecting a touch of the user on the touch surface (S), especially a capacitive or optical detecting system, the control circuit (4) being arranged to control the actuators (5) depending on the position thus detected and/or a system (7), especially a display covered by the touch surface, allowing an image to be at least partially superposed on the haptic surface and/or at least one actuator (11) allowing the interface to be selectively shaped into at least two distinct shapes.

11. Method for generating at least one tactile stimulus capable of being felt by a user touching an interface such as defined in any one of Claims 1 to 10, comprising the steps of:
- detecting the position of the touch of the user on the flexible touch surface of the interface by virtue of a detecting system,
- modulating, by virtue of a control circuit (4), the signals sent to the actuators (5) in order to make the stiffness of the fluid in certain regions of the chamber vary locally and to generate an effect perceptible tactilely by the user.

12. Method according to the preceding claim, the touch of the user on the touch surface being detected by virtue of at least some of the actuators, especially via a piezoelectric effect.

13. Method according to one of Claims 11 and 12, the stiffness variation generating a tactile stimulus giving the user the impression of touching a surface having a relief.

14. Process for manufacturing an interface such as defined in any one of Claims 1 to 10, comprising manufacture of an actuator, of the plurality of actuators, of piezoelectric ceramic type via the steps of:
- depositing at least a first layer (54) of a conductive material on the upper face of a flexible carrier (2b), preferably a flexible polymer sheet,
- fastening a piezoelectric ceramic (51) to the conductive layer thus formed,
- depositing, especially by inkjet printing, a layer of a conductive material (57) on the piezoelectric ceramic,
- depositing a layer of an electrical insulator (58), which is preferably deposited by printing, on the layers deposited beforehand.

15. Process for manufacturing an interface such as defined in any one of Claims 1 to 10, comprising the step of:
joining two said flexible walls (2a, 2b), especially by welding or adhesive bonding, so as to form the chamber (2), at least one of the walls having said actuators (5) on one of its faces.
